# EUROPEAN PATENT SPECIFICATION

(11) **EP 0 379 664 B1**
(45) Date of publication and mention of the grant of the patent: **11.08.1993**
(21) Application number: 89121438.9
(22) Date of filing: 20.11.1989
(51) Int. Cl.: H02K 13/04, H01R 39/32

(54) **Commutator for electric machines**
Kommutator für elektrische Maschinen
Collecteur pour machines électriques

(30) Priority: 25.01.1989 IT 1241289
(43) Date of publication of application: 01.08.1990
(73) Proprietor: MAM COLLETTORI S.R.L, I-21040 Morazzone Varese (IT)
(72) Inventor: Magnani, Maura, I-21100 Varese (IT)
(74) Representative: Porsia, Bruno

(56) References cited:
- GB-A- 2 189 352
- GB-A- 2 203 291

## Description

The invention relates to a commutator for electric machines which consists of a plurality of conductive bars which are insulated the one from the other, each conductive bar being provided at one end thereof with a connecting hook-like member, and an electric wire of the respective winding being enclosed in said connecting hook-like member, with the free end of said member being so bent about the electric wire and being so pressed against the surface of the conductive bar that the terminal portion of the free end of the connecting hook-like member bears against the surface of the conductive bar, and the connecting hook-like member surrounds the electric wire, the insulation of the electric wire being eliminated at the portion of its contact with the surface of the hook-like member and/or the said wire being welded to the said connecting hook-like member by means of a heating electric current.

A commutator of this kind is known from the document GB-A-2 203 291 and by having been manufactured by the applicant.

At present, the conductive bars are so made that when the free end of a connecting hook-like member comes to be set into contact with the surface of a conductive bar, an electric contact will be produced between the said two members. Such an electric contact causes derived leakage currents to be originated when the heating and/or welding electric current is being fed at a connecting hook-like member. The said leakage currents considerably reduce the heating efficiency at the contact area between an electric wire and a connecting hook-like member, so that in order to obtain a required performance, the pressure force between a hook-like member and an electric wire needs to be increased. Therefore, also the pressure stress at only one end of a conductive bar will be thus increased. Such a drawback, combined with a heating of a conductive bar in areas where this is not required, particularly in proximity of a connecting hook-like member, and then also with a heating of the electric insulation between the individual bars, particularly of the insulating plastics material, leads to a lowered quality of the commutator, and maybe to the commutator being impaired.

The problem on which the invention is founded therefore is to provide a commutator of the type as described in the preamble, in which with the aid of means of a simple and economical construction, an electric wire of a winding can be firmly engaged with the respective conductive bar, by concentrating the effects of the electric heating in the area for the mutual contact of this electric wire and the connecting hook-like member of the associated conductive bar, whereby to avoid the aforementioned drawbacks which are due to a high welding pressure and to the derived leakage currents, and to thus obtain a better electric contact between the wire and the conductive bar, without impairing the commutator.

The invention solves the problem as set forth above by the feature that at least one or both of the areas for the mutual contact of a conductive bar and the free end of the terminal portion of the connecting hook-like member comprise insulating material so that they are electrically insulated from each other.

According to a particularly preferred embodiment of the invention, the conductive bar portion for the contact of this portion with the free end of the connecting hook-like member is formed by an insert of an insulating material, particularly of the same insulating material as provided between the individual commutator bars, and the said insert extends over a part, or over the entire width of a bar. Of course, also air may be provided as insulating matter, or that portion of the conductive bar surface which is meant for its contact with the free end of the connecting hook-like member, may be formed with a hole, a recess, or the like, to be simply left void.

In a further embodiment, the insulating material is provided in that portion of a connecting hook-like member free end which is meant for its contact with the conductive bar, and the said material may, for example, form either entirely or partly the terminal portion of the free end of a connecting hook-like member.

Thanks to such a construction of the bars, it is thus possible to prevent any derived leakage current from being originated, by having the current flow, and then the heating, limited to the areas for the mutual contact of a connecting hook-like member and an electric wire of the respective winding. This allows both to reduce the pressure force between a connecting hook-like member and an electric wire, and to shorten the machining time, which results in a higher productivity, and also to considerably reduce the material costs, since it is possible to use, for example, less costly plastics materials not containing asbestos, for insulating the individual bars from each other, while obtaining a commutator of a superior quality also as for what concerns the conductivity and the stability of the electric contact between the electric wires and the respective conductive bars. Moreover, also some advantages are afforded from the view point of energy consumption, since the shortening of the machining time and the reduced pressure force surely involve also a considerable saving of electric energy.

Also other features further improving the above-disclosed commutator form the object of the invention and are the subject of the dependent Claims.

The particular features of the invention and the advantages arising therefrom will appear more in detail from the disclosure of some preferred embodiments thereof, shown by way of non-limiting examples in the accompanying drawings, in which:
Figure 1 is a side view of a conductive bar according to the invention, with its terminal portion close to its connecting hook-like member being shown in section.
Figure 2 is a top view showing the terminal portion of the conductive bar, according to Figure 1, which is close to its connecting hook-like member.
Figure 3 is a cross-sectional view of the conductive bar, which is taken on line III-III in Figure 1.
Figure 4 is a sectional view showing the end of the bar according to Figure 1, which is close to its connecting hook-like member, with the said hook-like member being in its pressed condition against an electric wire.
Figures 5 and 6 show the terminal portion of the conductive bar which is close to its hook-like member, according to a second embodiment of the invention.
Figures 7 and 8 show the terminal portion of the conductive bar which is close to its connecting hook-like member, according to a third embodiment of the invention.

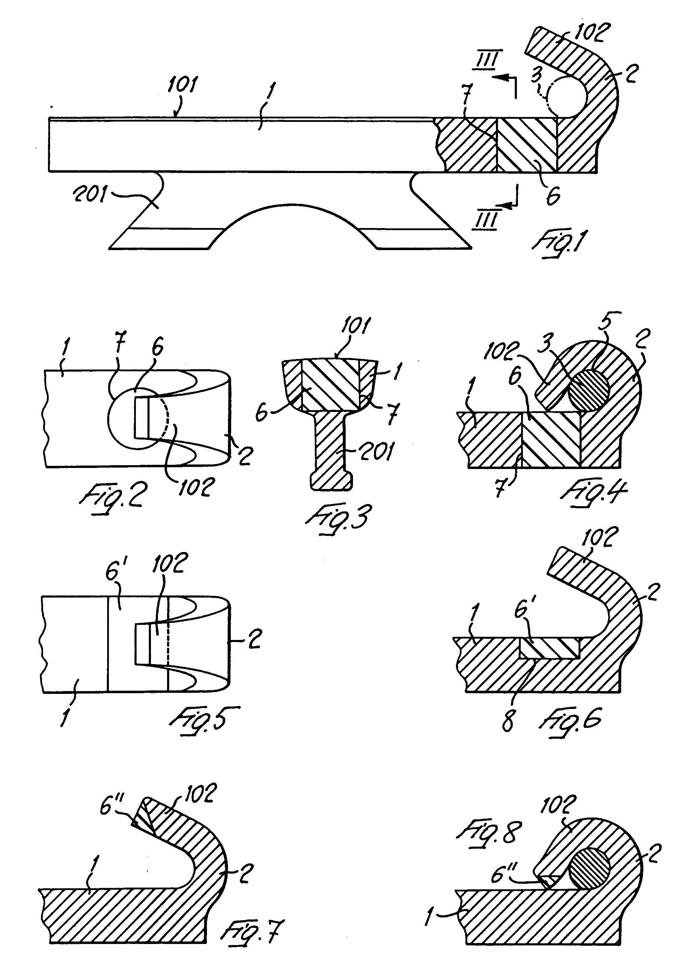

In Figure 1 there is shown a first embodiment of a conductive bar of a commutator for electric machines. The commutator (not shown) consists of a plurality of conductive bars arranged in a side-by-side relation and insulated from each other. The assembly of these conductive bars forms a generally cylindrical surface, with each bar constituting an electrically conductive segment, and being in turn electrically connected with an electric wire of a winding.

The bar 1 shown in Figure 1 consists of a contact rod of an electrically conductive material, generally copper or a suitable alloy, with its contact surface 101 being slightly curved. The bar 1 is provided on its side lying opposite to the contact surface 101, with an anchoring extension 201 for incorporating and firmly engaging by a positive coupling the said bar in a supporting mass. This supporting mass may be of plastics material and may at the same time form also the electric insulation between the individual conductive bars.

Each conductive bar 1 is provided at one end thereof with an appendix in form of a connecting hook-like member 2 for the electrical connection of an electric wire 3 of the associated winding. This connecting hook-like member 2 is formed of one piece with the conductive bar 1 and is, particularly at its free end 102, of a smaller width than the bar 1 (Figure 2). The inner bending radius of the connecting hook-like member 2 substantially corresponds to the radius of the electric wire 3 which is housed therewithin.

As it particularly appears from Figure 4, to have an electric wire 3 fastened to a connecting hook-like member 2, the free end 102 of this hook-like member 2 will be bent and pressed against the respective contact bar 1 so as to cause the said hook-like member 2 to surround and press the wire 3 substantially over the most of a peripheral portion thereof. In this case, also the terminal portion of the free end 102 of the connecting hook-like member 2 comes to be pressed against the surface of the conductive bar 1. While a connecting hook-like member 2 is being pressed against an electric wire 3, a heating electric current will be fed at this connecting hook-like member 2 for eliminating the insulation of the wire in the area 5 for its contact with the surface of the connecting hook-like member 2, and/or for welding together the said two members. In order to prevent any derived leakage current from being produced owing to the reciprocal contact of the terminal portion of the free end 102 of a connecting hook-like member 2 with its conductive bar 1, this latter bar is provided in the area for its contact with the connecting hook-like member 2, with an insert 6 of insulating material.

In the conductive bar 1 according to Figure 1, the said insert 6 of insulating material is formed by electrically insulating plastics material which fills a respective hole 7 provided in the conductive bar 1 and extending throughout the thickness of the bar. The insulating material 6 which fills the hole 7, is so confined that it is substantially flush with the bar 1. The insert 6 and the hole 7 have a diameter which is slightly greater than the width of the terminal portion of the free end 102 of the connecting-hook-like member 2. Thanks to the provision of such a diameter, the electric insulation between the free end 102 of the hook-like member 2 and the conductive bar 1 will be ensured even when a stretching or a slight sideward displacement of the hook-like member free end 102 may occur, at the time the said hook-like member 2 is being pressed against the conductive bar 1.

Of course, the hole 7 may receive any desired type of electrically insulating material, and may be even left void, so as to profit by the electric insulation properties of air. Otherwise, when a supporting mass is used, such as a mass of plastics material or of an electrically insulating material, the said hole 7 may be filled, at the time the conductive bars are being incorporated into the supporting mass, with the same supporting mass which is caused to likely fill also the insulating gaps between the individual bars.

In Figures 5 and 6 there is shown a second embodiment of the conductive bar. The conductive bar 1 and its connecting hook-like member 2 are similar to the embodiment according to Figure 1, and the difference between the two embodiments resides only in the insert of insulating material located in the area for the mutual contact between the terminal portion of the free end 102 of the connecting hook-like member 2 and the surface of the conductive bar 1. In this embodiment, the insulating insert 6′ located in the area for the mutual contact between the conductive bar 1 and the free end 102 of its hook-like member 2, is actually formed by a layer of electrically insulating material having a smaller thickness than the bar 1, and being received into a respective recess 8 in the conductive bar 1, which is provided in the said area. The said insulating insert 6′ extends throughout the width of the conductive bar 1 so as to complete its shape, and is substantially flush with the said bar. Also in this case, the recess 8 may be left void, or the electric insulation may be formed solely by air. Preferably, however, the insert 6′ is suitably formed by the same supporting and insulating mass as for the conductive bars, similarly as disclosed in the former embodiment.

In Figures 7 and 8 there is shown a third embodiment of the conductive bar according to the invention. In this case, the insert of insulating material 6˝ forms the terminal portion of the free end 102 of the connecting hook-like member 2, and the said portion is caused to bear against the surface of the conductive bar 1. More particularly, in this embodiment the corner piece which is turned toward the surface of the conductive bar 1 has been cut off from the terminal portion of the free end 102 of the connecting hook-like member 2, and the said cut-off piece has been replaced with an insert 6˝ having a correspondent triangular cross-sectional shape, and being formed by an electrically insulating material.

The bar according to the invention therefore allows to eliminate in a simple and economical manner any derived leakage currents, and to obtain a concentration of the heating action in the area in which an electric wire 3 of a winding and the connecting hook-like member 2 of the respective conductive bar 1 bear against each other. Thus, it is possible to make with a lower expenditure of time and energy, a highly conductive electric connection of the commutator to the respective windings and to improve the electric efficiency of the commutator, while avoiding that the same may be impaired during the connection step. Moreover, in the embodiments according to Figures 1 to 6, the construction of the insulating insert may be even limited to the provision of recesses made in the area for the mutual contact between a conductive bar and the terminal portion of the free end of its connecting hook-like member, since the said recesses can be filled with the same supporting mass for the conductive bars, at the time the said bars are being incorporated, without having thus to provide a further operative step in the commutator manufacturing process.

Of course the invention is not limited to the just described and shown embodiments, and the same may be widely changed and modified, the more so in construction. Thus, for example, the electrically insulating pieces which are provided in a conductive bar 1 and in its connecting hook-like member 2, may be of any desired shape and size, and may be simultaneously provided in the conductive bar 1 and in the terminal portion of the free end of the connecting hook-like member 2. The whole without departing from the scope of the Claims.

## Claims

1. A commutator for electric machines which consists of a plurality of conductive bars (1) which are insulated the one from the other, each conductive bar being provided at one end thereof with a connecting hook-like member (2), and an electric wire (3) of the respective winding being enclosed in said connecting hook-like member, with the free end (102) of said member (2) being so bent about the electric wire (3) and being so pressed against the surface of the conductive bar (1) that the terminal portion of the free end (102) of the connecting hook-like member (2) bears against the surface of the conductive bar (1), and the connecting hook-like member (2) surrounds the electric wire (3), the insulation of the electric wire (3) being eliminated at the portion of its contact with the surface of the hook-like member (2), and/or the said wire (3) being welded to the said connecting hook-like member (2) by means of a heating electric current, characterized in that at least one or both of the areas for the mutual contact of the conductive bar (1) and the free end (102) of the terminal portion of the connecting hook-like member (2) comprise insulating material so that they are electrically insulated from each other.

2. The commutator according to claim 1, characterized in that that portion of the conductive bar (1) which is meant for its contact with the free end (102) of the connecting hook-like member (2) is formed by an electrical insulation insert (6,6').

3. The commutator according to claim 2, characterized in that the electrical insulation insert (6,6') is formed by a solid material.

4. The commutator according to claim 3, characterized in that the insulating insert (6,6') is formed by the same electrical insulation material as provided between the individual conductive bars (1) of the commutator.

5. The commutator according to any one or more of the preceding claims, characterized in that the electrical insulation insert (6,6' ) is received in a respective recess (7,8) formed in the surface of the conductive bar (1) and provided in that area of the said bar (1) which is meant for its contact with the terminal portion of the free end (102) of the contact hook-like member (2).

6. The commutator according to claim 5, characterized in that the recess for receiving the electrical insulation insert (6) is a hole (7) extending through a part or through the entire thickness of the conductive bar (1), and having a diameter which is greater than the associated terminal portion of the free end (102) of the connecting hook-like member (2).

7. The commutator according to claim 5, characterized in that the recess for receiving the electrical insulation insert (6') is a cavity of a depth which is less than the thickness of the conductive bar (1), and which extends throughout the width, or over part of the width of the said conductive bar.

8. The commutator according to any one or more of the preceding claims, characterized in that the insert (6,6') of insulating material extends to the surfaces delimiting the conductive bar (1), so as to be substantially flush therewith.

9. The commutator according to claim 1, characterized in that the insert (6'') of insulating material is provided in the terminal portion of the free end (102) of the connecting hook-like member (2).

10. The commutator according to claim 9, characterized in that the insert (6'') of insulating material forms the corner piece of the terminal portion of the free end (102) of the connecting hook-like member (2), which is turned toward the conductive bar (1), and which extends so as to substantially complete the said free end (102).

## Patentansprüche

1. Kommutator für elektrische Maschinen, bestehend aus einer Vielzahl von leitfähigen Stäben (1), die voneinander isoliert sind, wobei jeder leitfähige Stab an seinem einen Ende mit einem verbindenden hakenartigen Teil (2) versehen ist und ein elektrischer Draht (3) der betreffenden Windung in dem verbindenden hakenartigen Teil eingeschlossen ist, wobei das freie Ende (102) des Teils (2) derart über den elektrischen Draht (3) gebogen ist und so gegen die Fläche des leitfähigen Stabes (1) gepreßt ist, daß das Endteil des freien Endes (102) des verbindenden hakenformigen Teils (2) sich an die Fläche des leitfähigen Stabes (1) anlegt, wobei der verbindende hakenartige Teil (2) den elektrischen Draht umgibt, wobei ferner die Isolation des elektrischen Drahtes (3) an der Kontaktstelle mit der Fläche des hakenartigen Teils (2) entfernt ist und/oder wobei der Draht (3) durch einen elektrischen Heizstrom mit dem verbindenden hakenartigen Teil (2) verschweißt ist,
**dadurch gekennzeichnet,**
daß zumindest ein oder beide Bereiche des gemeinsamen Kontakts zwischen den leitfähigen Stäben (1) und dem freien Ende (102) des Endteils des leitfähigen hakenartigen Teils (2) Isolationsmaterial besitzen, so daß sie elektrisch voneinander isoliert sind.

2. Kommutator nach Anspruch 1,
**dadurch gekennzeichnet,**
daß derjenige Teil des leitfähigen Stabes (1), der für den Kontakt mit dem freien Ende (102) des leitfähigen hakenartigen Teils (2) vorgesehen ist, durch einen elektrischen Isolationseinsatz (6, 6') ausgebildet ist.

3. Kommutator nach Anspruch 2,
**dadurch gekennzeichnet,**
daß der elektrische Isolationseinsatz (6, 6') aus festem Material besteht.

4. Kommutator nach Anspruch 3,
**dadurch gekennzeichnet,**
daß der Isolationseinsatz (6, 6') aus dem gleichen elektrischen Isolationsmaterial besteht, wie es zwischen den einzelnen leitfähigen Stäben (1) des Kommutators vorgesehen ist.

5. Kommutator nach einem oder mehreren der Ansprüche 1 bis 3,
**dadurch gekennzeichnet,**
daß der elektrische Isolationseinsatz (6, 6') in einer entsprechenden Ausnehmung (7, 8) aufgenommen ist, die in der Fläche des leitfähigen Stabes (1) ausgebildet und in dem Bereich des Stabes (1) vorgesehen ist, der für den Kontakt mit dem Endteil des freien Endes (102) des verbindenden hakenartigen Teils (2) vorgesehen ist.

6. Kommutator nach Anspruch 5,
**dadurch gekennzeichnet,**
daß die Ausnehmung zur Aufnahme des elektrischen Isolationseinsatzes (6) ein Loch ist, das sich über einen Teil oder durch die gesamte Dicke des leitfähigen Stabes (1) erstreckt und einen Durchmesser hat, der größer ist als das zugehörige Endteil des freien Endes (102) des verbindenden hakenartigen Teils (2).

7. Kommutator nach Anspruch 5,
**dadurch gekennzeichnet,**
daß die Ausnehmung zur Aufnahme des elektrischen Isolationseinsatzes (6') eine Aushöhlung ist mit einer Tiefe, die geringer ist als die Dicke des leitfähigen Stabes (1) und die sich über die gesamte Breite oder über einen Teil der Breite des leitfähigen Stabes erstreckt.

8. Kommutator nach einem oder mehreren der Ansprüche 1 bis 7,
**dadurch gekennzeichnet,**
daß der Einsatz (6, 6') aus Isolationsmaterial sich zu den Oberflächen erstreckt, die den leitfähigen Stab (1) begrenzen, so daß er im wesentlichen damit fluchtet.

9. Kommutator nach Anspruch 1,
**dadurch gekennzeichnet,**
daß der Einsatz (6'') aus Isolationsmaterial in dem Endteil des freien Endes (102) des verbindenden hakenartigen Teils (2) vorgesehen ist.

10. Kommutator nach Anspruch 9,
**dadurch gekennzeichnet,**
daß der Einsatz (6'') aus Isolationsmaterial das Eckteil des Endteils des freien Endes (102) des verbindenden hakenartigen Teils (2) ausbildet, das zum leitfähigen Stab (1) gedreht ist und das sich derart erstreckt, daß es in wesentlichen das freie Ende (102) vervollständigt.

## Revendications

1. Un collecteur pour des machines électriques qui consiste en un ensemble de lames conductrices (1) qui sont mutuellement isolées, chaque lame conductrice comportant à une extrémité un élément de connexion en forme de crochet (2), avec un fil électrique (3) de l'enroulement respectif emprisonné dans cet élément de connexion en forme de crochet, et avec l'extrémité libre (102) de cet élément (2) courbée autour du fil électrique (3) et pressée contre la surface de la lame conductrice (1) de façon que la partie terminale de l'extrémité libre (102) de l'élément de connexion en forme de crochet (2) porte contre la surface de la lame conductrice (1), et que l'élément en forme de crochet (2) entoure le fil électrique (3), l'isolant du fil électrique (3) étant éliminé dans la partie dans laquelle ce fil est en contact avec la surface de l'élément en forme de crochet (2), et/ou le fil (3) étant soudé à l'élément de connexion en forme de crochet (2) au moyen d'un courant électrique de chauffage, caractérisé en ce que l'une au moins des zones de contact mutuel de la lame conductrice (1) et de l'extrémité libre (102) de la partie terminale de l'élément de connexion en forme de crochet (2) consiste en un matériau isolant, de façon que la lame conductrice et l'extrémité libre précitée soient mutuellement isolées au point de vue électrique.

2. Le collecteur selon la revendication 1, caractérisé en ce que la partie de la lame conductrice (1) qui est destinée à venir en contact avec l'extrémité libre (102) de l'élément de connexion en forme de crochet (2) est formée par un élément rapporté d'isolation électrique (6, 6').

3. Le collecteur selon la revendication 2, caractérisé en ce que l'élément rapporté d'isolation électrique (6, 6') est formé par une matière à l'état solide.

4. Le collecteur selon la revendication 3, caractérisé en ce que l'élément rapport d'isolation électrique (6, 6') est formé par une matière d'isolation électrique identique à celle qui est employée entre les lames conductrices individuelles (1) du collecteur.

5. Le collecteur selon l'une quelconque ou plusieurs des revendications précédentes, caractérisé en ce que l'élément rapporté d'isolation électrique (6, 6') est logé dans une cavité respective (7, 8) qui est formée dans la surface de la lame conductrice (1), et qui est placée dans la région de cette lame (1) qui est destinée à venir en contact avec la partie terminale de l'extrémité libre (102) de l'élément de contact en forme de crochet (2).

6. Le collecteur selon la revendication 5, caractérisé en ce que la cavité qui est destinée à recevoir l'élément rapporté d'isolation électrique (6) est un trou (7) qui s'étend à travers une partie ou la totalité de l'épaisseur de la lame conductrice (1), et qui a un diamètre supérieur à celui de la partie terminale associée de l'extrémité libre (102) de l'élément de connexion en forme de crochet (2).

7. Le collecteur selon la revendication 5, caractérisé en ce que la cavité qui est destinée à recevoir l'élément rapporté d' isolation électrique (6') est une cavité ayant une profondeur qui est inférieure à l'épaisseur de la lame conductrice (1), et qui s'étend sur toute la largeur, ou sur une partie de la largeur, de la lame conductrice.

8. Le collecteur selon l'une quelconque ou plusieurs des revendications précédentes, caractérisé en ce que l'élément rapporté (6, 6') en une matière isolante s'étend jusqu'aux surfaces qui délimitent la lame conductrice (1), de façon à affleurer pratiquement ces surfaces.

9. Le collecteur selon la revendication 1, caractérisé en ce que l'élément rapporté (6'') en une matière isolante est placé dans la partie terminale de l'extrémité libre (102) de l'élément de connexion en forme de crochet (2).

10. Le collecteur selon la revendication 9, caractérisé en ce que l'élément rapporté (6'') en une matière isolante forme la pièce de coin de la partie terminale de l'extrémité libre (102) de l'élément de connexion en forme de crochet (2), qui fait face à la lame conductrice (1) et qui s'étend de façon à compléter pratiquement l'extrémité libre précitée (102).
